Europäisches Patentamt

(19) European Patent Office

Office européen des brevets

(11) Publication number: **0 075 617**

**A1**

## (12) EUROPEAN PATENT APPLICATION

(21) Application number: **81304417.9**

(22) Date of filing: **24.09.81**

(51) Int. Cl.³: **G 01 S 7/52**
**G 01 S 15/14**

(43) Date of publication of application:
**06.04.83 Bulletin 83/14**

(84) Designated Contracting States:
**DE FR GB**

(71) Applicant: **DENTAN KABUSHIKI KAISHA**
**48-5-205, Hatsudai 1-chome Shibuya-ku**
**Tokyo 150(JP)**

(72) Inventor: **Sugiyama, Kazuo**
**14-12, Shinkawa 3-chome**
**Mitaka-shi Tokyo(JP)**

(74) Representative: **Goldsmith, Barry Sanders et al,**
**Marks & Clerk 57/60 Lincoln's Inn Fields**
**London WC2A 3LS(GB)**

(54) Ultrasonic distance measuring device.

(57) An ultrasonic distance measuring device comprising a pulse generator (1) generating a first pulse (6), a transducer circuit (9, 10, 11, 12, 13) converting the first pulse (6) into, and transmitting, an ultrasonic signal with a duration shorter than the first pulse (6), another transducer circuit (19, 20, 21) detecting the ultrasonic signal and converting it into a second pulse (22, 32) with a duration shorter than the first pulse (6), a logic circuit (16) receiving the first (6) and second (22, 32) pulses and generating a third pulse (23) when the second pulse (22, 32) only is input, and a time counter (17) receiving the first (16) and third (23) pulses and measuring a time interval therebetween.

The transmitted ultrasonic signal has a duration sufficiently short for accurate short distance measurement. Interference between ultrasonic signals received directly and those reflected from targets is eliminated.

*F I G. 1*

TITLE OF THE INVENTION

Ultrasonic Distance Measuring Device

BACKGROUND OF THE INVENTION

(1)  Field of the Invention

The present invention relates to an ultrasonic distance measuring device.

More particularly, the present invention relates to an ultrasonic distance measuring device wherein a ultrasonic signal converted from an electric pulse is transmitted to and reflected back from a target and detected and converted into another electric pulse which is compared in a logical manner with the former pulse for determination of the distance between the target and device.

(2)  Description of Relevant Art

There have been known ultrasonic distance measuring devices which typically comprise an ultrasonic transmitter adapted for an electromechanical oscillatory conversion to produce by use of magnetostrictive or piezoelectric effect a set of continuous ultrasonic waves in response to original electric signals and to transmit them into air, water or such, an ultrasonic detector detecting the ultrasonic waves as reflected back from a target and converting them into corresponding electric signals, and a circuit comparing these electric signals with the original electric signals in a phase-related analogous manner to determine the time required for round trip of the ultrasonic waves as detected.

In the case of aerial ultrasonic transmission, the ultrasonic transmitter generally includes a ceramic vibratory element, which is at present most practical in obtaining an optimum vibratory period with respect to the efficiency of ultrasonic transmission, and the set of continuous ultrasonic waves is produced such that a high-frequency oscillatory potential having the same frequency of oscillation as the natural vibration frequency of the ceramic vibratory element is applied for a short time to the vibratory element, while allowing this element to perform a free attenuating vibratory motion for a certain length of time just after such forced resonant motion.

As a result, in such conventional type of ultrasonic distance measuring device there is a disadvantage that the transmitted set of continuous ultrasonic waves has a duration substantially longer than required for accurate distance measurement within a relatively short range. Further, there is a drawback in that the ultrasonic detector inherently detects direct ultrasonic waves from the transmitter besides the reflected ultrasonic waves from the target, thus resulting in a confused and inaccurate distance measurement especially when the target is standing within a relatively short range.

SUMMARY OF THE INVENSION

The present invention effectively solves the above described problems.

Therefore, an object of the present invention is to provide an ultrasonic distance measuring device wherein an ultrasonic signal as a set of continuous ultrasonic waves to be transmitted to and reflected back from a target has a duration sufficiently short for accurate measurement within a relatively short range of distance, and any ultrasonic signal directly received from a transmitter is prevented from being confused with the reflected ultrasonic signal from the target.

Namely, the present invention provides an ultrasonic distance measuring device comprising a pulse generator generating a first electric pulse, a first transducer converting the first pulse into and transmitting an ultrasonic signal with a first duration shorter than the first pulse, a second transducer detecting the ultrasonic signal and converting it into a second electric pulse with a second duration shorter than the first pulse, a logic circuit receiving the first and second pulses and generating a third electric pulse when the second pulse only is input, and a time counter receiving the first and third pulses and measuring a time interval therebetween.

An advantage according to the present invention resides in that the duration of ultrasonic signal is sufficiently short in the order of that of electric pulse, thus permitting a simple conversion from a set of ultrasonic waves into an electric pulse of short duration which facilitates a logic operation.

Moreover, because of the possible logic operation, the direct ultrasonic signal can be simply and firmly omitted, thus favorably increasing the accuracy of short distance measurement.

Other objects and advantages of the present invention will become apparent from the following detailed description when read in conjunction with the accompanying drawings.

BRIEF DESCRIPTION OF THE DRAWINGS

Figure 1. is a schematic circuit diagram of an ultrasonic distance measuring device as a preferred embodiment of the present invention.

Figure 2 is a schematic circuit diagram of a partially modified example of the ultrasonic distance measuring device in Figure 1.

Figure 3 is a waveform chart showing principal signal waveforms in the ultrasonic distance measuring device in Figure 1.

DETAILED DESCRIPTION OF PREFERRED EMBODIMENT

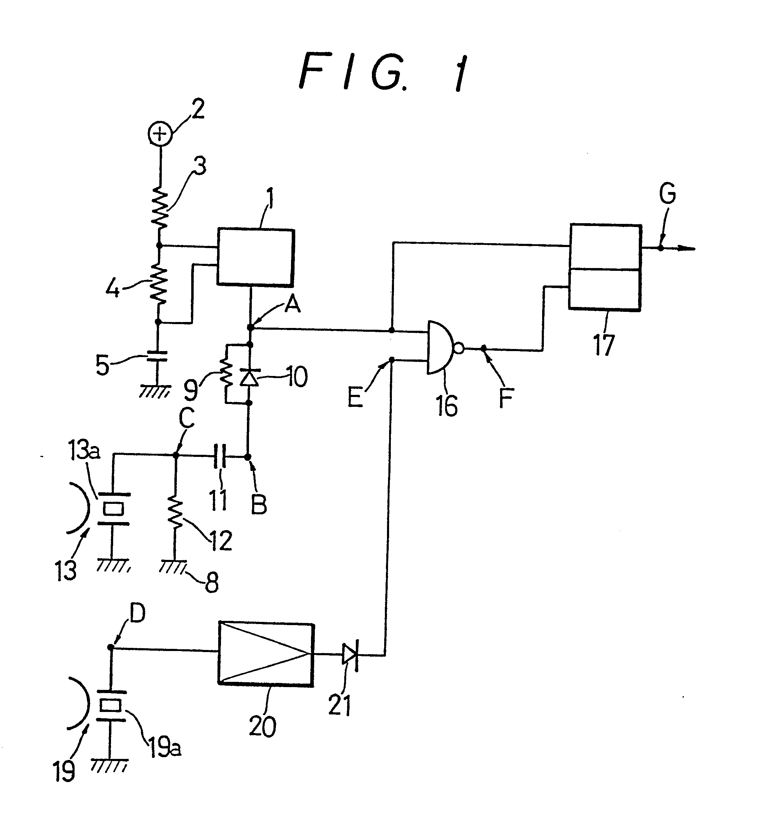

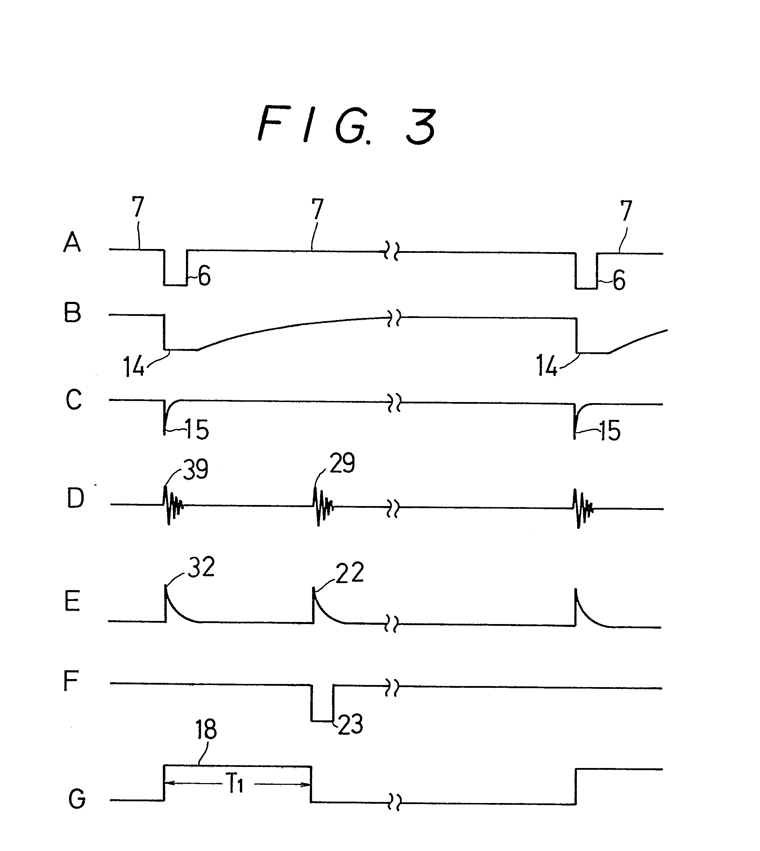

Referring first to Figures 1 and 3 showing a circuit diagram of an ultrasonic distance measuring device according to the present invention and a waveform chart of principal signals therein, respectively, designated at reference symbol 1 is an electric pulse generator supplied with a potential difference across a resistance 4 connected in series with another resistance 3 leading to an electric power source 2 and with a grounded capacitance 5. Pulse generator 1 produces at a point A a series of level "0" pulses 6 of a relatively short duration at relatively long intervals during which point A is kept at a high potential 7 of level "1". The pulse interval and duration depend on resistances 3 and 4, respectively, while they may be predetermined in accordance with service conditions of the device. For example, the interval and duration of pulses 6 may be about 10 msec and 0.1 msec, respectively, when using an ultrasonic wave of about 10μsec duration.

Output pulses 6 of pulse generator 1 are supplied to an electro-mechanical transducer system comprising a parallel circuit of a resistance 9 and a diode 10, a differential circuit consisting of a capacitance 11 and a resistance 12 earthed to the ground 8, and an ultrasonic transmitter 13 including an ultrasonic resonant vibrator 13a. The parallel circuit is connected in series with the differential circuit and transmitter 13 is connected in parallel with resistance 12.

An interconnecting point B between capacitance 11 and the parallel circuit of resistance 9 and diode 10 has a waveform 14 gradually raised up to level "1" as capacitance 11 is charged while point A is kept at level "1" and suddenly reduced to level "0" because electric charges of capacitance 11 are bypassed through diode 10 when a pulse 6 falls. On the other hand, an input point C of transmitter 13 has a sharp differential waveform 15 due to the function of the differential circuit consisting of capacitance 11 and resistance 12. Therefore, an impulse as sharp waveform 15 instantaneously triggers ultrasonic resonant vibrator 13a, thereby generating an ultrasonic signal which is a set of continuous ultrasonic waves quickly attenuated by the damping effect of resistance 12, so that the ultrasonic signal has a duration shorter than that of pulse 6 which may be predetermined as described before in sufficient consideration of the resonance frequency of vibrator 13a, damping effect of resistance 12, free vibration characteristics of transmitter 13, etc.

The ultrasonic waves are transmitted or projected by transmitter 13 to and reflected back from a target and detected by a mechanico-electrical transducer system comprising an ultrasonic detector 19 including an ultrasonic resonant vibrator 19a, an amplifier 20, and a diode 21. These three components of the transudcer system are connected in series.

When detector 19 receives the set of continuous ultrasonic waves as reflected from the target, resonant vibrator 19a vibrates in response to the ultrasonic waves, thereby producing at an output point D of detector 19 a corresponding electric waveform 29 which is amplified to a suitable level by amplifier 20 and half-wave rectified through diode 21, thus obtaining at a point E a pulse 22 having the same duration as waveform 29.

In the case of an ultrasonic signal directly transmitted from transmitter 13 to detector 19, the same circuit function as above produces a waveform 39 and a pulse 32 at points D and E, respectively, which are same with waveform 29 and pulse 22, respectively, in regard of the form while being of substantially the same phase as pulse 6 because detector 19 is very near to transmitter 13.

Pulses 22, 32 and pulse 6 are supplied to respective input terminals of a NAND gate 16 which has an output terminal F connected to a reset input terminal of a flip-flop circuit 17.

Pulses 22, 32 are positive and have level "1", while pulse 6 is negative and has level "0" as before-mentioned. Therefore, NAND gate 16, which gives an output pulse 23 of level "0" only when its both inputs have level "1" and an output level "1" in other case, can supply an effective reset signal to flip-flop circuit 17 only when pulse 22 is input because pulse 32 has the same phase as pulse 6. In other words, flip-flop circuit 17, which has a set input terminal receiving pulse 6, starts counting time when pulse 6 is input or an ultrasonic signal is transmitted and does not stop it until pulse 23 is input or the ultrasonic signal is reflected back from a target and detected by detector 19, thereby rendering it possible to accurately measure the time taken for round trip of the ultrasonic signal. This time is equal to a duration T of a set state 18 at an output point G of flip-flop circuit 17. This output point G may be further connected to an electric processing device (not shown) or the like for calcualation to determine the distance between the target and device.

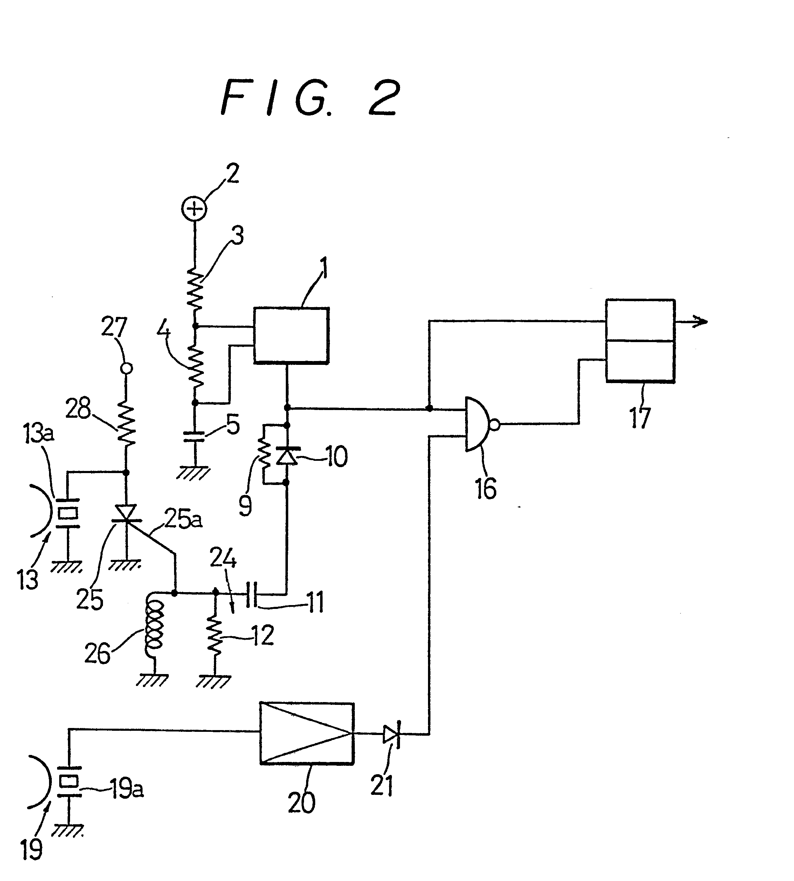

Referring now to Figure 2, there is shown a circuit diagram of a modified example of the above-mentioned embodiment of the present invention, wherein same components are designated by same reference symbols.

In Figure 2, between a differential circuit 24 and an ultrasonic transmitter 13, there is additonally provided a pulse amplifying circuit which comprises a thyrister 25 having its gate 25a connected to a grounded coil 26 and to a resistnce 12 of differential circuit 24, its anode connected to transmitter 13 and to a power source 27 through a resistance 28, and its cathode grounded.

In the above circuit arrangement, the sharp pulse 15 given by differential circuit 24 renders on gate 25a of thyrister 25, thus producing an amplified sharp pulse to thereby trigger ultrasonic resonant vibrator 13, so that large power ultrasonic waves are transmitted assuring a favorable measurement even for relatively long range of distance.

As will be understood from the foregoing description, according to the present invention, a favorable ultrasonic distance measuring device can be achieved wherein an ultrasonic signal of sufficiently short duration is generated by triggering an ultrasonic resonant vibrator using a pulse and direct ultrasonic waves from transmitter are firmly eliminated in a logical manner, thereby assuring an accurate measurement within a relatively small range of distance, and a long service life.

CLAIMS:

- 1 -

1.   An ultrasonic distance measuring device, comprising:

a pulse generator(1) generating a first electric pulse (6);

a first transducer (9, 10, 11, 12, 13) converting said first pulse (6) into an ultrasonic signal with a first duration shorter than said first pulse (6), and transmitting said ultrasonic signal;

a second transducer (19, 20, 21) detecting said ultrasonic signal and converting said ultrasonic signal into a second electric pulse (22,32 ) with a second duration shorter than said first pulse (6);

a logic circuit (16) receiving said first and second pulses (6; 22, 32 ), and generating a third electric pulse (23) when said second pulse (22, 32 ) only is input; and

a time counter (17) receiving said first and third pulses (6; 23) and measuring a time interval therebetween.

2.   A device according to claim 1, wherein:

said first transducer comprises a transmitter (13) having a first ultrasonic resonant vibrator (13a) triggered by a fourth electric pulse (15) obtained from said first pulse (6) through a differential circuit (24).

3.    A device according to claim 2, wherein:

said second transducer comprises a detector (19) having a second ultrasonic resonant vibrator (19a) resonanceable with said ultrasonic signal, an amplifier (20), and a diode (21);

and

said detector (19), said amplifier (20) and said diode (21) are connected in series to said logic circuit (16).

4.    A device according to claim 1, wherein:

said logic circuit (16) comprises a NAND circuit (16) supplied with said first and second pulses (6; 22, 32 ), and supplying said third pulse (23).

5.    A device according to claim 4, wherein:

said time counter (17) comprises a flip-flop circuit (17) supplied with said first and third pulses (6; 23).

6.    A device according to claim 2 or 3, wherein:

said first transducer further comprises a pulse amplifying circuit (25, 26, 27, 28) having a thyriste (25) between said transmitte (13) and said differential circuit

(24).

13

0075617

# FIG. 1

# F I G. 2

# F I G. 3

**European Patent Office**

**EUROPEAN SEARCH REPORT**

EP 81 30 4417

| | DOCUMENTS CONSIDERED TO BE RELEVANT | | | CLASSIFICATION OF THE APPLICATION (Int. Cl. 3) |
|---|---|---|---|---|
| Category | Citation of document with indication, where appropriate, of relevant passages | | Relevant to claim | G 01 S 7/52<br>G 01 S 15/14 |
| X | US - A - 3 504 333 (GRADA et al)<br>* Column 3, line 40 - column 4, line 15; column 4, line 65 - column 6, line 4 *<br>& GB - A - 1 204 939<br>& DE - A - 1 566 852<br>& FR - A - 2 034 403<br>-- | | 1,3-5 | |
| X | GB - A - 734 939 (SIEMENS-REINIGER)<br>* Page 2; lines 63-90 *<br>-- | | 1,2 | **TECHNICAL FIELDS SEARCHED (Int.Cl. 3)**<br><br>G 01 S<br>B 06 B<br>G 10 K |
| A | US - A - 3 564 490 (CAMP)<br>* The whole document *<br>-- | | 1,2 | |
| A | FR - A - 1 505 746 (WESTINGHOUSE ELECTRIC) | | 6 | |
| A | GB - A - 1 571 304 (LUCAS INDUS-TRIES)<br>---- | | 6 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| The Hague | 28-04-1982 | OLDROYD |

EPO Form 1503.1 06.78